# EUROPÄISCHE PATENTSCHRIFT

(11) **EP 0 896 838 B1**
(45) Veröffentlichungstag und Bekanntmachung des Hinweises auf die Patenterteilung: **06.11.2002**
(21) Anmeldenummer: 98115268.9
(22) Anmeldetag: 13.08.1998
(51) Int. Cl.: B09C 1/06

(54) **Verfahren und Vorrichtung zur Reinigung kontaminierter Materialien**
Method and device for cleaning contaminated materials
Procédé et dispositif pour nettoyer des matières contaminées

(30) Priorität: 14.08.1997 DE 19735392
(43) Veröffentlichungstag der Anmeldung: 17.02.1999
(73) Patentinhaber: Czetsch, Alexander, 81247 München (DE)
(72) Erfinder: Czetsch, Alexander, 81247 München (DE)
(74) Vertreter: Schmidt, Christian, Dipl.-Phys.

(56) Entgegenhaltungen:
- WO-A-97/37784
- US-A- 5 242 245
- US-A- 5 319 176

## Beschreibung

Die Erfindung betrifft eine Vorrichtung zur Reinigung kontaminierter Materialien von schüttfähiger und/oder pastöser Konsistenz gemäß dem Oberbegriff des Patentanspruchs 1.

Eine Vorrichtung dieser Art ist aus der US-A-5 242 245 bekannt. Bei dieser bekannten Vorrichtung wird das kontaminierte Material mittels eines Schneckenförderers kontinuierlich durch den Ringraum einer ersten Kammer transportiert und am Ende dieser ersten Kammer über einen Entspannungsraum in eine gleichartig ausgebildete zweite Kammer überführt, durch die es ebenfalls kontinuierlich mittels eines Schneckenförderers transportiert und am Ende dieser zweiten Kammer einem Entleerungsstutzen zugeführt wird. Beide Kammern sind beheizbar ausgeführt und mit einem gemeinsamen Vakuumseparator sowie einem Kondensator verbunden.

Es ist eine Aufgabe der Erfindung, eine Vorrichtung zur Reinigung kontaminierter Materialien zu schaffen, die auf umweltverträgliche Art und Weise und bei geringem Energieverbrauch eine möglichst einfache und schnelle Beseitigung der Verunreinigungen aus den Materialien ermöglicht. Ferner soll es die Erfindung auch gestatten, pastöse Stoffe, insbesondere Schlämme in vorteilhafter Weise zu trocknen.

Diese Aufgabe wird nach der Erfindung durch die Merkmale des Patentanspruchs 1 gelöst.

Die erfindungsgemäße Vorrichtung zeichnet sich im Vergleich zu kontinuierlich arbeitenden Anlagen durch hohe Durchsatzleistungen und durch konstruktive Einfachheit sowie damit verbundene Betriebssicherheit aus, da im Gegensatz zu kontinuierlich arbeitenden Anlagen nicht das gesamte System im Unterdruck betrieben werden muss und damit der entsprechend hohe konstruktive Aufwand vermieden werden kann. Außerdem ermöglicht es die Erfindung, die bestmöglichen Dekontaminationsergebnisse auch bei sehr unterschiedlich belasteten Materialien zu erzielen, da konstruktions- und systembedingt mehrere leicht beeinflussbare Steuergrößen zur Verfügung stehen, nämlich das Ausmaß der Wärmeeinbringung in die jeweilige Charge, die frei wählbare Verweilzeit für eine Materialcharge sowohl in der Trockenkammer als auch in der Dekontaminationskammer, das Ausmaß des Wasserdampfabzugs individuell für jede der beiden Kammern durch Kühlung mittels des jeweiligen Kondensators sowie die Vorgabe der individuellen Umwälzbewegung des Materials in beiden Kammern. Ferner ist von Bedeutung, dass der jeder der beiden Kammern zugeordnete individuelle Kondensator sowohl im Zusammenhang mit der Trockenkammer, wo große Mengen an erzeugtem Wasserdampf wieder in Wasser umgewandelt werden, als auch im Falle der Dekontaminationskammer, wo geringere Mengen Wasserdampf anfallen, jeweils praktisch als Saugquelle wirkt, und zwar während des gesamten Reinigungsprozesses, so dass zur Erzeugung des jeweils benötigten Vakuums nur eine vergleichsweise klein dimensionierte Vakuumpumpe erforderlich ist, da Kondensator und Pumpe sich unterstützend zusammenwirken.

Vorteilhafte Ausführungsformen der Erfindung sind in den Unteransprüchen angegeben.

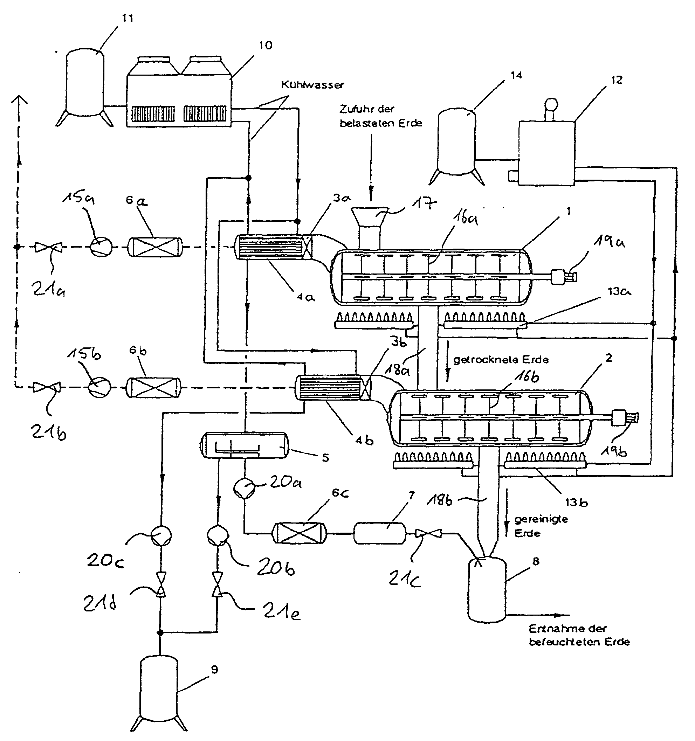

Die Erfindung wird im Folgenden beispielhaft anhand der Zeichnung beschrieben, deren einzige Figur eine Ausführungsform einer erfindungsgemäßen Reinigungs- bzw. Trocknungsvorrichtung zeigt.

Gemäß der dargestellten Ausführungsform ist eine im Wesentlichen zylindrische Trockenkammer 1 vorgesehen, die mit etwa horizontal verlaufender Zylinderachse angeordnet ist und in die die zu reinigenden Materialien vorzugsweise im Anschluss an eine Aufbereitung in einer nicht dargestellten Siebanlage über einen trichterförmigen Einfüllstutzen 17 einbringbar sind.

Die Siebanlage ist bevorzugt derart ausgelegt, daß nur Partikel mit einem mittleren Durchmesser von weniger als etwa 50mm in die Trockenkammer 1 gelangen.

Unterhalb der Trockenkammer 1 ist eine ebenfalls etwa zylindrische Dekontaminationskammer 2 angeordnet, in die die in vorgebbarer Weise getrockneten Materialien unter Ausnutzung der Schwerkraft über einen Entleerungsstutzen 18a überführbar sind. Die Zylinderachse der Dekontaminationskammer 2 verläuft ebenfalls im wesentlichen horizontal.

Die beiden Kammern 1, 2 sind mit Ausnahme zumindest ihres Arbeitsvolumens im wesentlichen baugleich ausgeführt, wobei die Dekontaminationskammer - abweichend von der schematischen Darstellung - bevorzugt um etwa 20% kleiner ist als die Trockenkammer 1.

Die gereinigten Materialien sind unter Schwerkraftausnutzung in eine unterhalb der Dekontaminationskammer 2 angeordnete Befeuchtungseinheit 8 einbringbar, aus der sie nach erfolgter Wiederbefeuchtung entnommen werden können.

In den jeweiligen Kammern 1, 2 sind die Materialien mittels einer Heizeinrichtung 12, 13a bzw. 13b, 14 erwärmbar. Vorzugsweise sind die Kammern 1, 2 doppelwandig ausgebildet, wobei der Hohlraum zwischen den Kammerwänden so gestaltet ist, daß zu Heizzwecken Thermoöl durchgeleitet werden kann. Das mittels einer Umwälzpumpe umwälzbare Thermoöl ist mittels eines an einen Flüssiggastank 14 angeschlossenen Brenners 12 erhitzbar.

Die Kammern 1, 2 sind jeweils mit einer Mischvorrichtung 16a, b versehen, mit der die in den Kammern 1, 2 befindlichen Materialien auflokkernd bewegt werden können. Die Mischvorrichtungen 16a, b sind jeweils als Schaufelmischwerk ausgebildet, das eine mit der Zylinderachse der Kammer 1, 2 im wesentlichen zusammenfallende Schleuderwerkswelle mit aufgeschweißten Schaufeltaschen und eingebauten Schaufelarmen mit Schaufeln umfaßt. Die Beschaufelung ist bevorzugt selbstreinigend ausgeführt.

Die erfindungsgemäß eingesetzten Mischwerke sind mit vergleichsweise hoher Drehzahl von z.B. etwa 20min⁻¹ betreibbar, wodurch eine optimale Durchmischung der zu erwärmenden Materialien erzielt wird.

Antreibbar sind die Mischwerke jeweils mittels einer bevorzugt von einem Drehstrommotor gebildeten, außerhalb der jeweiligen Kammer 1, 2 angeordneten Antriebseinheit 19a, b.

In einem Kondensationsbereich auf der von der Antriebseinrichtung 19a, b abgewandten Stirnseite der Kammern 1, 2 ist jeweils eine bevorzugt als Rohrbündel-Wärmetauscher ausgebildete, separate Kondensatoreinheit 4a, b angeordnet, in der die aufgrund der Materialerwärmung entstehenden Wasser- bzw. Schadstoffdämpfe kondensieren und der vorzugsweise jeweils ein Staubfilter 3a, b vorgeschaltet ist.

Die Kondensationsbereiche sind vorzugsweise jeweils mittels eines nicht dargestellten Trennschiebers von der Kammer 1, 2 bevorzugt fluiddicht trennbar. Die Kondensatoreinheiten 4a, b sind jeweils an einen bevorzugt regelbare Umwälzpumpen umfassenden Kühlkreislauf angeschlossen. Als Kühlfluid wird bevorzugt Wasser verwendet, das in einem an eine Frischwasserversorgung 11, z.B. einen Wassertank, angeschlossenen Kühlturm 10 gekühlt wird.

An den Kondensationsbereich der Trockenkammer 1 ist eine Kondenswasser-Aufbereitungseinheit 5, 6a angeschlossen, die vorzugsweise einen Flüssig/flüssig-Abscheider 5 und einen als Aktivkohlefilter ausgebildeten Adsorber 6c umfaßt.

Mittels des Abscheiders 5 aus dem Kondenswasser entfernte Schadstoffe sind zur Zwischenspeicherung in einem Schadstoff-Sammeltank 9 mittels einer bevorzugt als magnetgekuppelte Gleitschieberpumpe ausgebildeten Flüssigkeitspumpe 20b abpumpbar.

An den Kondenswasserauslaß des Abscheiders 5 ist eine weitere, vorzugsweise als magnetgekuppelte Peripheralradpumpe ausgebildete Flüssigkeitspumpe 20a angeschlossen, mit der das Kondenswasser durch den Adsorber 6c zur Beseitigung von organischen Verbindungen hindurch und in einen der Zwischenspeicherung dienenden Kondenswasser-Sammeltank 7 gepumpt werden kann.

An den Kondensationsbereich der Dekontaminationskammer 2 ist eine weitere, bevorzugt als magnetgekuppelte Gleitschieberpumpe ausgebildete Flüssigkeitspumpe 20c angeschlossen, mit der die kondensierten Schadstoffe in den Schadstoff-Sammeltank 9 pumpbar sind.

An die kammerabgewandten Seiten der Kondensationsbereiche ist jeweils eine Vakuumpumpe 15a, b angeschlossen, mit der in der jeweiligen Kammer 1, 2 ein Unterdruck herstellbar ist. Vorzugsweise sind die Vakuumpumpen 15a, b jeweils als einstufige, ölgeschmierte und luftgekühlte Drehschieber-Vakuumpumpe ausgebildet. Vorgeschaltete Adsorber 6a, b, die bevorzugt ebenfalls als Aktivkohlefilter ausgebildet sind, verhindern das Eindringen von organischen Verbindungen in die Vakuumpumpen 15a, b.

An ihrer Unterseite ist die Trockenkammer 1 mit einem in die Dekontaminationskammer 2 mündenden Entleerungsstutzen 18a verbunden.

Über einen von der Unterseite der Dekontaminationskammer 2 ausgehenden Austragstutzen 18b sind die gereinigten Materialien in eine Befeuchtungseinheit 8 einbringbar, in der die Materialien vor ihrer Entnahme wiederbefeuchtet werden können.

In der dargestellten Ausführungsform ist zur Wiederbefeuchtung das im Kondenswasser-Sammeltank 7 zwischengespeicherte, mittels des vorgeschalteten Adsorbers 6c gereinigte Kondenswasser vorgesehen. Ein in der Leitung zwischen dem Kondenswasser-Sammeltank 7 und der Befeuchtungseinheit 8 angeordnetes Absperrventil 21c kann zu diesem Zweck geöffnet werden.

Absperrventile 21d, e bzw. 21a, b sind des weiteren zwischen den Flüssigkeitspumpen 20b, c und dem Schadstoff-Sammeltank 9 sowie in den jeweils an die Druckseiten der Vakuumpumpen 15a, b angeschlossenen Abluftleitungen angeordnet.

Die gemäß der Erfindung ausgebildete Reinigungsvorrichtung wird bevorzugt nach dem erfindungsgemäßen Reinigungsverfahren wie folgt betrieben:

Zunächst wird das zu reinigende Material, beispielsweise mit Schadstoffen wie Kohlenwasserstoffen belastetes Erdreich, das zuvor gesiebt wurde, in die Trockenkammer 1 über den trichterförmigen Einfüllstutzen 17 eingebracht.

Anschließend wird die Kammer 1 verschlossen und die Trennung von Kondensationsbereich und Kammer 1 durch Betätigen des Trennschiebers aufgehoben.

Danach wird die Heizeinrichtung 12, 13a, 14 aktiviert, um das eingebrachte Material zu erwärmen, und der Kühlkreislauf der Kondensatoreinheit 4a in Gang gesetzt. Mittels der Antriebseinrichtung 19a wird das Mischwerk 16a in Rotation versetzt, um durch die resultierende Materialumwälzung und -auflockerung eine möglichst gleichmäßige Verteilung der zugeführten Wärme im Material zu bewirken und optimale Verdampfungsbedingungen herzustellen.

Die Evakuierung der Trockenkammer 1 durch die Vakuumquelle 15a kann sowohl vor als auch nach dem Beginn der Materialerwärmung einsetzen. Wird in der Kammer 1 frühzeitig ein Unterdruck hergestellt, so wird von vornherein jegliche Explosions- bzw. Berstgefahr beseitigt.

Der Beginn der Evakuierung der Kammer 1 wird in Abhängigkeit von der Materialbeschaffenheit, insbesondere dem Feuchtigkeitsgrad der Materialien derart gewählt, daß mit möglichst wenig Energieaufwand eine optimale Materialerwärmung erzielt und eine möglichst große Wassermenge verdampft wird.

Vorzugsweise werden die Materialien bei einem Kammerdruck von etwa 100mbar auf ungefähr 50°C erwärmt. Die Vakuumquelle 15a ist in Abhängigkeit von dem Arbeitsvolumen der Trockenkammer derart gewählt, daß sich der erforderliche Kammerdruck innerhalb einer kurzen Zeit von vorzugsweise etwa 10min einstellt.

Das in der Kondensatoreinheit 4a verflüssigte Wasser wird mittels Abscheider 5 und Adsorber 6c von Schadstoffen befreit und im Kondenswasser-Sammeltank 7 zwischengespeichert, während die im Abscheider 5 anfallenden Schadstoffe im Schadstoff-Sammeltank 9 zwischengelagert werden.

Die mittels des in Strömungsrichtung vor der Vakuumquelle 15a angeordneten Adsorbers 6a gereinigte Abluft wird in die Atmosphäre abgelassen.

Wenn der gewünschte Trocknungsgrad erreicht ist, werden die beiden Kammern 1, 2 durch Öffnen vakuumfester Absperrorgane (nicht gezeigt) über den Entleerungsstutzen 18a derart miteinander verbunden, daß das getrocknete Material in die Dekontaminationskammer 2 fällt.

Während der nachstehend erläuterten Reinigungsphase in der Dekontaminationskammer 2 kann die Trockenkammer 1 bereits wieder mit feuchten, verunreinigten Materialien beschickt werden.

Der für den Reinigungsprozeß optimale Kammerdruck in der Dekontaminationskammer 2 bestimmt sich außer aus der Materialbeschaffenheit und der jeweils erforderlichen Materialtemperatur auch aus den Eigenschaften der aus dem Material zu entfernenden Verunreinigungen.

Grundsätzlich wird ein möglichst niedriger Kammerdruck angestrebt, da dann die Temperaturen, bei denen die Verdampfung der Verunreinigungen einsetzt, vergleichsweise niedrig sind. Niedrige Temperaturen bedeuten eine Reduzierung des Energieverbrauchs und der Explosionsgefahr durch im Material befindliche Zündquellen wie beispielsweise aneinanderstoßende Steine, die das Gas in der Dekontaminationskammer entzünden können.

Der Kammerdruck wird bevorzugt unter Berücksichtigung der Dampfdruckkurven aller im Material jeweils vorhandenen Verunreinigungen derart eingestellt, daß sich sowohl optimale Verdampfungs- als auch Kondensationsraten einstellen.

In einer Ausführungsform der Erfindung beträgt der minimale Druck in der Dekontaminationskammer 2 etwa 10mbar und die maximale Temperatur, auf die die Materialien dabei erwärmbar sind, ungefähr 300°C. Die Vakuumquelle 15b ist in Abhängigkeit von dem Arbeitsvolumen der Dekontaminationskammer 2, das bevorzugt kleiner als jenes der Trockenkammer 1 ist, derart gewählt, daß sich der erforderliche Kammerdruck innerhalb einer kurzen Zeit von vorzugsweise ebenfalls etwa 10min einstellt.

Wie beim Betrieb der Trockenkammer 1 kann auch die Evakuierung der Dekontaminationskammer 2 durch die Vakuumquelle 15b sowohl vor als auch nach dem Beginn der Materialerwärmung einsetzen. Wird in der Dekontaminationskammer 2 frühzeitig ein Unterdruck hergestellt, so wird von vornherein jegliche Explosions- bzw. Berstgefahr beseitigt.

Der Beginn der Evakuierung der Dekontaminationskammer 2 wird in Abhängigkeit von der Materialbeschaffenheit und der jeweils erforderlichen Materialtemperatur derart gewählt, daß mit möglichst wenig Energieaufwand eine optimale Materialerwärmung erzielt wird.

Die im Kondensationsbereich kondensierten Schadstoffe werden in den Schadstoff-Sammeltank 9 gepumpt, während die mittels des in Strömungsrichtung vor der Vakuumquelle 15b angeordneten Adsorbers 6b gereinigte Abluft in die Atmosphäre abgelassen wird.

Zusätzlich zu den bevorzugt als Aktivkohlefiltern ausgebildeten Adsorbern 6a, b können insbesondere zur Entfernung von Furanen und Dioxinen aus der Abluft zusätzliche Absorbereinheiten vorgesehen sein.

Am Ende der Reinigungsphase wird der zuvor mittels eines vakuumfesten Absperrorgans (nicht gezeigt) versperrte Zugang zum Austragstutzen 18b freigegeben, wodurch die gereinigten Materialien in die Befeuchtungseinheit 8 fallen. Durch Öffnen des Ventils 21c wird anschließend eine gewünschte Menge des im Kondenswasser-Sammeltanks 7 befindlichen schadstofffreien Kondenswasser zur Wiederbefeuchtung der gereinigten Materialien in die bevorzugt zur Besprühung des zu befeuchtenden Materials ausgebildete Befeuchtungseinheit 8 geleitet, die außerdem mit einem Mischorgan versehen sein kann.

Während der Beschickung bzw. Entleerung der Kammern 1, 2 sind die die Kondensatoreinheiten 4a, b enthaltenden Kondensationsbereiche jeweils mittels Trennschieber von den Kammern 1, 2 getrennt, so daß zuvor kondensierte Schadstoffe nicht in die Atmosphäre gelangen können und insbesondere nicht die Gefahr besteht, daß Bedienungspersonal mit kondensierten Schadstoffen in Kontakt gelangt.

Grundsätzlich kann in Abhängigkeit von der Beschaffenheit der Materialien und den Eigenschaften der zu entfernenden Verunreinigungen die Materialbehandlung in der Trocken- und/oder der Dekontaminationskammer 1, 2 auch ohne Unterdruck erfolgen. In derartigen Fällen ist meist eine höhere Heizleistung erforderlich, um das Material auf eine für die Verdampfung des Wassers bzw. der Verunreinigungen optimale Temperatur zu erwärmen.

Die erfindungsgemäße Materialreinigung schließt eine Gefährdung der Umwelt aus, da Schadstoffe weder in dampfförmiger noch in flüssiger Form aus dem System austreten können. Praktisch alle aus dem Material entfernten Verunreinigungen werden entweder in den Adsorbern 6a, b, c festgehalten oder einem einzigen Schadstoff-Sammeltank 9 zugeführt und können daher auf bequeme Art und Weise sicher entsorgt werden. Die Abtrennung der Kondensatoreinheiten 4a, b durch Trennschieber sorgt darüber hinaus für ein gefahrloses Beschicken und Entleeren der Kammern 1, 2.

Solange der erforderliche Energieaufwand eine sowohl unter wirtschaftlichen als auch ökologischen Gesichtspunkten sinnvolle Materialreinigung gestattet, ist die Größe der erfindungsgemäßen Vorrichtung prinzipiell nicht beschränkt. Auch umfangreiche Materialmengen, die beispielsweise bei der Sanierung großflächiger Industriegelände anfallen, lassen sich daher grundsätzlich gemäß der Erfindung von Verunreinigungen befreien.

Das Verfahren nach der Erfindung eignet sich in besonders vorteilhafter Weise auch zum Trocknen nasser Materialien, insbesondere zum Trocknen pastöser Stoffe und Schlämme, wie sie beispielsweise aus Kammerpressen kommen. Derartige Materialien können einen Wassergehalt von 40 % bis 60 % besitzen und müssen entsorgt werden.

Eine Trocknung dieser Materialien ist trotz des dazu erforderlichen Energieaufwands wirtschaftlich, sofern diese Trocknung optimal durchgeführt werden kann. Dies ist nach dem erfindungsgemäßen Verfahren und insbesondere unter Verwendung der erfindungsgemäßen Vorrichtung möglich.

Hierzu kann z.B. der die Kammern 1, 2 verbindende Entleerungsstutzen 18a mit einer Weiche versehen sein, so daß getrocknetes Material anstatt in die Dekontaminationskammer 2 in einen bereitgestellten Auffangbehälter fällt. Es ist auch möglich, die Dekontaminationskammer 2 als weitere Trockenkammer zu verwenden und auf diese Weise mit einem zweistufigen Trocknungsverfahren zu arbeiten.

Im Gegensatz zu bekannten Trocknungsverfahren, bei denen nur ein begrenztes Entziehen von Wasser möglich ist, kann mittels der Erfindung ein Trocknungsgrad bis nahezu 100 % erzielt werden. Vorteilhaft ist in diesem Zusammenhang, daß das zu trocknende Gut während der Trocknung umgewälzt und dabei nasse Klumpen oder nasse Körper praktisch schichtweise aufgelöst werden, so daß das Material schließlich in Form eines trockenen Pulvers vorliegt.

## Patentansprüche

1. Vorrichtung zur Reinigung kontaminierter Materialien von schüttfähiger und/oder pastöser Konsistenz,
insbesondere schadstoffbelasteter Böden, oder zur Trocknung von pastösen Stoffen und Schlämmen, insbesondere Schlämmen aus Kammerpressen,
mit zumindest einer Trockenkammer (1) für die mittels einer Heizeinrichtung (12, 13a, 14) erwärmbaren Materialien,
wenigstens einer separaten, an eine Unterdruckquelle angeschlossenen Dekontaminationskammer (2),
in welcher von der Trockenkammer (1) stammende, in vorgebbarer Weise getrocknete Materialien zur Verdampfung von Verunreinigungen mittels einer weiteren Heizeinrichtung (12, 13b, 14) weiter erwärmbar sind,
wobei sowohl in der Trockenkammer (1) als auch in der Dekontaminationskammer (2) eine das eingebrachte Material bewegendes, rotierend angetriebene Mischvorrichtung (16a, 16b) mit außerhalb der jeweiligen Kammer (1, 2) angeordneter Antriebseinheit (19a, 19b) vorgesehen ist und
die Trockenkammer (1) und die Dekontaminationskammer (2) mit einer Kondensatoreinheit (4a, b) verbunden sind,
**dadurch gekennzeichnet,**
**dass** die Trockenkammer (1) und die Dekontaminationskammer (2) als chargenweise beschickbare, verschließbare Kammern ausgebildet sind,
**dass** als Mischvorrichtung sowohl in der Trockenkammer (1) als auch in der Dekontaminationskammer (2) ein das chargenweise eingebrachte Material auflockernd bewegendes Mischwerk (16a, 16b) in Form eines Schaufelmischwerks vorgesehen ist,
**dass** die Trockenkammer (1) und die Dekontaminationskammer (2) jeweils mit einer eigenen Kondensatoreinheit (4a, 4b) verbunden sind, und dass zumindest an die der Dekontaminationskammer (2) zugeordnete Kondensatoreinheit (4b) eine Vakuumpumpe (15b, 15a) angeschlossen ist, mittels der in der zugeordneten Kammer (1, 2) ein vorgebbarer Unterdruck erzeugbar ist.

2. Vorrichtung nach Anspruch 1,
**dadurch gekennzeichnet,**
**dass** die Trockenkammer (1) und die Dekontaminationskammer (2) jeweils an der von der Antriebseinheit (19a, 19b) abgewandten Seite der Kammer (1, 2) mit der zugeordneten Kondensatoreinheit (4a, 4b) verbunden sind.

3. Vorrichtung nach Anspruch 1 oder 2,
**dadurch gekennzeichnet,**
**dass** zur chargenweisen Beschickung und Entleerung der oder jeder Kammer (1, 2) ein die jeweilige Kondensatoreinheit (4a, 4b) enthaltender Kondensationsbereich mittels eines Trennschiebers von der Kammer (1, 2) abtrennbar ist.

4. Vorrichtung nach einem der vorhergehenden Ansprüche,
**dadurch gekennzeichnet,**
**dass** jede Mischvorrichtung (16a, 16b) als ETS-(Einwellen-Turbulenz-System-)Mischwerk ausgebildet ist und/oder dass zur Erwärmung der in der jeweiligen Kammer (1, 2) befindlichen Materialien die Kammerwandung beheizbar ist und/oder dass die oder jede Kammer (1, 2) doppelwandig ausgeführt ist und in dem Hohlraum zwischen den Kammerwänden mit einem erhitzbaren Fluid füllbare Heizschlangen (13a, b) der Heizeinrichtung (12, 13a, b, 14) angeordnet sind.

5. Vorrichtung nach Anspruch 1 oder 2,
**dadurch gekennzeichnet,**
**dass** die Vakuumpumpe (15a, 15b) jeweils an der kammerabgewandten Seite der zugeordneten Kondensatoreinheit (4a, 4b) angeschlossen ist.

6. Vorrichtung nach einem der vorhergehenden Ansprüche,
**dadurch gekennzeichnet,**
**dass** die Dekontaminationskammer (2) unterhalb der Trockenkammer (1) angeordnet und zwischen den beiden mit vakuumfesten Absperrorganen versehenen Kammern (1, 2) eine Verbindungsleitung (18a) zur Schwerkraftüberführung der vorgetrockneten Materialien nach Öffnung der Absperrorgane in die Dekontaminationskammer (2) vorgesehen ist.

7. Vorrichtung nach Anspruch 6,
**dadurch gekennzeichnet,**
**dass** die Verbindungsleitung (18a) bezüglich der Trockenkammer mittig angeordnet ist.

8. Vorrichtung nach einem der vorhergehenden Ansprüche,
**dadurch gekennzeichnet,**
**dass** an der Unterseite der Dekontaminationskammer (2) ein Austragstutzen (18b) für die gereinigten Materialien vorgesehen ist, der in eine mit einem Mischorgan versehene Befeuchtungseinheit (8) mündet.

9. Vorrichtung nach einem der vorhergehenden Ansprüche,
**dadurch gekennzeichnet,**
**dass** die Dekontaminationskammer (1) und die Trockenkammer (2) im wesentlichen baugleich ausgebildet sind.

10. Vorrichtung nach einem der vorhergehenden Ansprüche,
**dadurch gekennzeichnet,**
**dass** den Vakuumpumpen (15a, b) jeweils ein Adsorber (6a, b) vorgeschaltet ist.

11. Vorrichtung nach einem der vorhergehenden Ansprüche,
**dadurch gekennzeichnet,**
**dass** die Kondensatoreinheiten (4a, b) an einen regelbare Umwälzpumpen umfassenden Kühlkreislauf angeschlossen sind.

12. Vorrichtung nach einem der vorhergehenden Ansprüche,
**dadurch gekennzeichnet,**
**dass** die Temperaturen und Drücke in der Trockenkammer (1) und in der Dekontaminationskammer (2) unterschiedlich sind, wobei der Druck in der Dekontaminationskammer (2) wesentlich geringer als in der Trockenkammer (1) und die Temperatur wesentlich höher ist.

13. Vorrichtung nach einem der vorhergehenden Ansprüche,
**dadurch gekennzeichnet,**
**dass** die Befeuchtungseinheit (8) über eine absperrbare Leitung mit einem Kondenswasser-Sammeltank (7) zur Wiederbefeuchtung der gereinigten Materialien verbunden ist.

14. Vorrichtung nach Anspruch 13,
**dadurch gekennzeichnet,**
**dass** die Befeuchtungseinheit (8) mit einem Mischorgan versehen ist und die Kondenswasserzuführung durch Besprühen erfolgt.

15. Vorrichtung nach einem der vorhergehenden Ansprüche,
**dadurch gekennzeichnet,**
**dass** der Trockenkammer (1) eine Siebanlage vorgeschaltet ist, die Partikel größer etwa 50 mm aussondert.

16. Vorrichtung nach einem der vorhergehenden Ansprüche,
**dadurch gekennzeichnet,**
**dass** ein Schadstoff-Sammeltank (9) vorgesehen ist, in den alle kondensierten Schadstoffe pumpbar sind.

## Claims

1. An apparatus for the cleaning of contaminated materials capable of being heaped up and/or of pasty consistency ,
in particular of contaminated ground, or for the drying of pasty substances and slurries, in particular slurries from chamber presses,
comprising at least one drying chamber (1) for the materials heatable by means of a heating device (12, 13a, 14),
at least one separate decontamination chamber (2) connected to a source of vacuum,
in which materials originating from the drying chamber (1) and dried in a pre-determinable manner can be further heated by means of a further heating device (12, 13b, 14) for the vaporisation of contaminants,
wherein, both in the drying chamber (1) and in the decontamination chamber (2), a mixing device (16a, 16b) is provided which moves the material introduced, is driven in a rotating manner and has a drive unit (19a, 19b) arranged outside the respective chamber (1, 2); and the drying chamber (1) and the decontamination chamber (2) are connected to a condenser unit (4a, b),
**characterised in that**
the drying chamber (1) and the decontamination chamber (2) are formed as closable chambers which can be loaded batch-wise;
**in that** a moving mixing mechanism (16a, 16b) is provided as the mixing apparatus in the drying chamber (1) in the form of a blade mixer, said moving mixing mechanism loosening up the material introduced batch-wise;
**in that** the drying chamber (1) and the decontamination chamber (2) is each connected to its own condenser unit (4a, 4b);
and **in that** a vacuum pump (15b, 15a), by means of which a pre-settable depression can be produced in the associated chamber (1, 2), is connected at least to the condenser unit (4b) associated with the decontamination chamber (2).

2. An apparatus in accordance with claim 1, **characterised in that** the drying chamber (1) and the decontamination chamber (2) are each connected to the associated condenser unit (4a, 4b) at the side of the chamber (1, 2) remote from the drive unit (19a, 19b).

3. An apparatus in accordance with claim 1 or claim 2, **characterised in that**, for the batch-wise loading and unloading of the or each chamber (1, 2), a condensation zone containing the respective condenser unit (4a, 4b) can be separated from the chamber (1, 2) by a partitioning slider.

4. An apparatus in accordance with any one of the previous claims, **characterised in that** each mixing apparatus (16a, 16b) is designed as an ETS (one-wave turbulence) system mixing mechanism; and/or **in that** the chamber wall is heatable for the heating of the materials located in the respective chamber (1, 2); and/or **in that** the or each chamber (1, 2) is made with double walls and heating coils (13a, b) of the heating device (12, 13a, b, 14) are arranged in the hollow space between the chamber walls and can be filled with a heatable fluid.

5. An apparatus in accordance with claim 1 or claim 2, **characterised in that** the vacuum pump (15a, 15b) is connected in each case to the side of the associated condenser unit (4a, 4b) remote from the chamber.

6. An apparatus in accordance with any one of the previous claims, **characterised in that** the decontamination chamber (2) is arranged beneath the drying chamber (1) and a connection line (18a) is provided between the two chambers (1, 2) provided with shut-off members resistant to vacuum for the gravity transport of the pre-dried materials into the decontamination chamber (2) after opening the shut-off members.

7. An apparatus in accordance with claim 6, **characterised in that** the connection line (18a) is arranged centrally with respect to the drying chamber.

8. An apparatus in accordance with any one of the previous claims, **characterised in that** a discharge stub (18b) for the cleaned materials is provided at the lower side of the decontamination chamber (2) and opens into a moistening unit (8) provided with a mixing member.

9. An apparatus in accordance with any one of the previous claims, **characterised in that** the decontamination chamber (1) and the drying chamber (2) are made substantially of the same design.

10. An apparatus in accordance with any one of the previous claims, **characterised in that** a respective adsorber (6a, b) is interposed in front of the vacuum pumps (15a, b).

11. An apparatus in accordance with any one of the previous claims, **characterised in that** the condenser units (4a, b) are connected to a cooling circuit including controllable circulation pumps.

12. An apparatus in accordance with any one of the previous claims, **characterised in that** the temperatures and pressures in the drying chamber (1) and the decontamination chamber (2) are different, with the pressure in the decontamination chamber (2) being substantially lower than in the drying chamber (1) and the temperature being substantially higher.

13. An apparatus in accordance with any one of the previous claims, **characterised in that** the moistening unit (8) is connected to a condensate collection tank (7) for the re-moistening of the cleaned materials.

14. An apparatus in accordance with claim 13, **characterised in that** the moistening unit (8) is provided with a mixing member and the condensate supply takes place by spraying.

15. An apparatus in accordance with any one of the previous claims, **characterised in that** a screening unit is disposed in front of the drying chamber (1) which separates particles larger than approximately 50 mm.

16. An apparatus in accordance with any one of the previous claims, **characterised in that** a contaminant collection tank (9) is provided into which all condensed contaminants can be pumped.

## Revendications

1. Dispositif pour nettoyer des matériaux contaminés en vrac et/ou de consistance pâteuse, en particulier de sols pollués, ou pour sécher des substances pâteuses et des boues, en particulier des boues de filtres à plateaux, comprenant :
au moins une chambre de séchage (1) pour les matériaux destinés à être chauffés au moyen d'un dispositif de chauffage (12, 3a, 14),
au moins une chambre de décontamination séparée (2) raccordée à une source de dépression,
dans laquelle les matériaux séchés de manière prédéterminable issus de la chambre de séchage (1) peuvent être encore chauffés pour évaporer les polluants au moyen d'un autre dispositif de chauffage (12, 13b, 14),
dispositif dans lequel il est prévu, tant dans la chambre de séchage (1) que dans la chambre de décontamination (2), un dispositif de mélange (16a, 16b) entraîné en rotation pour déplacer le matériau introduit avec une unité d'entraînement (19a, 19b) aménagée à l'extérieur des chambres respectives (1, 2), et
la chambre de séchage (1) et la chambre de décontamination (2) sont reliées à une unité de condensation (4a, b),
**caractérisé en ce que**
la chambre de séchage (1) et la chambre de décontamination (2) se présentent sous la forme de chambres qui peuvent être alimentées en discontinu et fermées,
il est prévu comme dispositif de mélange, tant dans la chambre de séchage (1) que dans la chambre de contamination (2), un mélangeur (16a, 16b) déplaçant le matériau introduit en discontinu de façon à l'ameublir sous la forme d'un mélangeur à palettes,
la chambre de séchage (1) et la chambre de décontamination (2) sont respectivement reliées à une unité de condensation propre (4a, 4b) et au moins l'unité de condensation (4b) affectée à la chambre de décontamination (2) est raccordée à une pompe à vide (I5b, 15a) au moyen de laquelle une dépression prédéterminable peut être produite dans la chambre correspondante (1, 2).

2. Dispositif selon la revendication 1,
**caractérisé en ce que**
la chambre de séchage (1) et la chambre de décontamination (2) sont respectivement reliées à l'unité de condensation correspondante (4a, 4b) sur le côté des chambres (1, 2) opposé à l'unité d'entraînement (19a, 19b).

3. Dispositif selon la revendication 1 ou 2,
**caractérisé en ce que**
pour alimenter et vider en discontinu la ou chaque chambre (1, 2), une zone de condensation contenant l'unité de condensation respective (4a, 4b) peut être séparée des chambres (1, 2) au moyen d'une vanne isolante.

4. Dispositif selon l'une quelconque des revendications précédentes,
**caractérisé en ce que**
chaque dispositif de mélange (16a, 16b) se présente sous la forme d'un mélangeur ETS (système de turbulence à une hélice) et/ou, pour chauffer les matériaux se trouvant dans les chambres respectives (1, 2), la paroi des chambres peut être chauffée et/ou la ou chaque chambre (1, 2) présente une double paroi et des serpentins de chauffage (13a, b) du dispositif de chauffage (12, 13a, b, 14) qui peuvent être remplis d'un fluide chauffé sont agencés dans l'espace creux entre les parois des chambres.

5. Dispositif selon la revendication 1 ou 2,
**caractérisé en ce que**
la pompe à vide (15a, 15b) est respectivement raccordée au côté de l'unité de condensation correspondante (4a, 4b) opposé aux chambres.

6. Dispositif selon l'une quelconque des revendications précédentes,
**caractérisé en ce que**
la chambre de décontamination (2) est agencée en dessous de la chambre de séchage (1) et il est prévu, entre les deux chambres (1, 2) munies d'organes d'arrêt résistant au vide, une conduite de raccordement (18a) pour transférer sous l'effet de la pesanteur les matériaux pré-séchés vers l'ouverture de l'organe d'arrêt dans la chambre de décontamination (2).

7. Dispositif selon la revendication 6,
**caractérisé en ce que**
la conduite de raccordement (18a) est agencée en position centrale par rapport à la chambre de séchage.

8. Dispositif selon l'une quelconque des revendications précédentes,
**caractérisé en ce que**
il est prévu, sur la partie inférieure de la chambre de décontamination (2), une tubulure de décharge (18b) pour les matériaux nettoyés, qui débouche dans une unité d'humidification (8) pourvue d'un organe de mélange.

9. Dispositif selon l'une quelconque des revendications précédentes,
**caractérisé en ce que**
la chambre de décontamination (2) et la chambre de séchage (1) se présentent sensiblement sous la forme d'une construction.

10. Dispositif selon l'une quelconque des revendications précédentes,
**caractérisé en ce que**
un adsorbeur (6a, b) est respectivement disposé en amont des pompes à vide (15a, b).

11. Dispositif selon l'une quelconque des revendications précédentes,
**caractérisé en ce que**
les unités de condensation (4a, b) sont raccordées à un circuit de refroidissement comprenant une pompe de recirculation réglable.

12. Dispositif selon l'une quelconque des revendications précédentes,
**caractérisé en ce que**
les températures et les pressions dans la chambre de séchage (1) et dans la chambre de décontamination (2) sont différentes, la pression dans la chambre de décontamination (2) étant sensiblement plus petite quc celle de la chambre de séchage (1) et la température sensiblement plus élevée.

13. Dispositif selon l'une quelconque des revendications précédentes,
**caractérisé en ce que**
l'unité d'humidification (8) est reliée à un réservoir collecteur d'eau de condensation (7) via une conduite blocable pour réhumidifier les matériaux nettoyés.

14. Dispositif selon la revendication 13,
**caractérisé en ce que**
l'unité d'humidification (8) est pourvue d'un organe de mélange et l'acheminement de l'eau de condensation se fait par pulvérisation.

15. Dispositif selon l'une quelconque des revendications précédentes,
**caractérisé en ce que**
la chambre de séchage (1) est disposée en amont d'un installation de criblage qui sépare les particules d'une taille supérieure à environ 50 mm.

16. Dispositif selon l'une quelconque des revendications précédentes,
**caractérisé en ce que**
il est prévu un réservoir collecteur de polluants (9) dans lequel tous les polluants condensés peuvent être pompés.
